# EUROPÄISCHE PATENTANMELDUNG

(11) **EP 0 817 458 A2**
(43) Veröffentlichungstag der Anmeldung: **07.01.1998**
(21) Anmeldenummer: 97111316.2
(22) Anmeldetag: 04.07.1997
(51) Int. Cl.: H04M 15/00, H04L 12/00

(54) **Vorrichtung zur Ermöglichung einer kostenoptimierten Telekommunikation**

(30) Priorität: 06.07.1996 DE 19627287
(71) Anmelder: Triple I GmbH für technische Kommunikationsintegration, D-90411 Nürnberg (DE)
(72) Erfinder:
(74) Vertreter: Matschkur, Götz, Lindner Patent- und Rechtsanwälte

(57) **Zusammenfassung**

Vorrichtung zur Ermöglichung einer kostenoptimierten Telekommunikation unter Verwendung einer Telekommunikationsvorrichtung und eines oder mehrerer Telekommunikationsnetze, wobei mehrere unterschiedliche Telekommunikationsnetze zur Verfügung stehen, die, gegebenenfalls in Verbindung miteinander, dabei einen Kommunikationspfad bildend, im Rahmen der Telekommunikation nutzbar sind, wobei die mit der Telekommunikationsvorrichtung kommunizierende Vorrichtung über Zugangsmittel zu mehreren unterschiedlichen Netzen verfügt und ein Mittel zur Ermittlung und Anwahl desjenigen Telekommunikationsnetzes oder Kommunikationspfades aufweist, das oder der hinsichtlich der gegebenen Kommunikationskosten im Zeitpunkt des Eingangs der von der Telekommunikationsvorrichtung gelieferten Anwahlsignale optimiert ist, wobei die Ermittlung in Abhängigkeit netzspezifischer Kostenparameter erfolgt.

## Beschreibung

Die Erfindung betrifft eine Vorrichtung zur Ermöglichung einer kostenoptimierten Telekommunikation unter Verwendung einer Telekommunikationsvorrichtung und eines oder mehrerer Telekommunikationsnetze, wobei mehrere unterschiedliche Telekommunikationsnetze zur Verfügung stehen, die, gegebenenfalls in Verbindung miteinander, dabei einen Kommunikationspfad bildend, im Rahmen der Telekommunikation nutzbar sind.

Durch die zunehmende Liberalisierung im Fernmeldewesen ist es bereits heute privaten Anbietern möglich, neben den öffentlichen Netzen auch eigene Netze zu betreiben und Vermittlungs- und Telekommunikationsdienstleistungen anzubieten. Dies wird in Zukunft noch ausgeprägter werden, da dann auch ausländische Anbieter in verstärktem Maße ihre Netze zur Verfügung stellen können. Exemplarisch sind hier die Mobilfunknetze zu nennen. Jeder Netzbetreiber bietet seinen Kunden eigene Tarife an, die von Netz zu Netz erheblich voneinander abweichen. So unterscheidet beispielsweise die Deutsche Telekom AG in ihrer Tarifstruktur fünf verschiedene Tarifzeiten, in welchen das Telefonieren für 12 Pfennige pro Einheit für eine Gesprächsdauer von 11,5 Sekunden bis 180 Sekunden möglich ist, stets abhängig davon, zu welcher Tarifzeit die Telekommunikation erfolgen soll. Parallel hierzu fallen Gebühren für Netzübergänge zu den Mobilfunknetzen an, wenn ein Teilnehmer vom Telekom-Netz aus einen Mobilfunkteilnehmer erreichen möchte, das heißt, wenn er sich quasi eines aus verschiedenen Telekommunikationsnetzen zusammengesetzten Telekommunikationspfades bedient.

Aber auch die Mobilfunknetzbetreiber bieten unterschiedliche Tarifmodelle an. So unterscheiden sie beispielsweise zwischen Business- und Freizeittarif, Vieltelefonierer und Privatnutzer, etc. Ein erheblicher Unterschied wird auch zwischen einem sogenannten 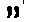 on net"- und einem 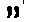 off net"-Verkehr gemacht. Im 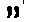 on net"-Verkehr, bei dem eine Verbindung von einem Netzteilnehmer zu einem am gleichen Netz partizipierenden Netzteilnehmer gegeben ist, kostet zum Beispiel die Verbindung pro Minute nur 49 Pfennig (im Falle des D1-Netzes), während die gleiche Verbindung zu einem am Telekom-Netz partizipierenden Teilnehmer ( 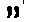 off net"-Verkehr) pro Minute 1,15 DM kostet.

Bereits jetzt, in naher Zukunft aber noch viel stärker, ist die gesamte Gebührenstruktur insbesondere für Privatnutzer undurchsichtig, das heißt, es ist ihnen nur sehr aufwendig und umständlich möglich, die im Zeitpunkt des Gesprächs gegebene Gebührenstruktur, die Zeiten und die Netze zu erkennen und zu unterscheiden, mit dem Ergebnis, daß derjenige, der sich mit den Tarifmodellen der unterschiedlichen Netze nicht auskennt, teuer kommuniziert.

Der Erfindung liegt somit das Problem zugrunde, eine Einrichtung anzugeben, mit der es möglich ist, eine kostenoptimierte Telekommunikation zu erreichen.

Zur Lösung dieses Problems ist bei einer Vorrichtung der eingangs genannten Art erfindungsgemäß vorgesehen, daß die mit der Telekommunikationsvorrichtung kommunizierende Vorrichtung über Zugangsmittel zu mehreren unterschiedlichen Netzen verfügt und ein Mittel zur Ermittlung und Anwahl desjenigen Telekommunikationsnetzes oder Kommunikationspfades aufweist, das oder der hinsichtlich der gegebenen Kommunikationskosten im Zeitpunkt des Eingangs der von der Telekommunikationsvorrichtung gelieferten Anwahlsignale optimiert ist, wobei die Ermittlung in Abhängigkeit netzspezifischer Kostenparameter erfolgt.

Die erfindungsgemäße Vorrichtung besitzt also Zugang zu mehreren, mindestens zwei, unterschiedlichen Telekommunikationsnetzen, die jeweils eine eigene Gebührenstruktur aufweisen. Will nun eine Person mittels der Telekommunikationsvorrichtung, bei der es sich um ein Einzelgerät oder um ein in ein gesamtes Telekommunikationssystem eingebundenes Gerät handeln kann, ein Gespräch führen und eine Verbindung zu einem anderen Teilnehmer herstellen, so wird mit besonderem Vorteil durch das erfindungsgemäß vorgesehene Mittel dasjenige Telekommunikationsnetz oder ein entsprechender Kommunikationspfad ausgewählt, welches in dem Zeitpunkt, zu dem die Person die Verbindung anwählt, am kostengünstigsten ist. Das heißt, die Vorrichtung ermöglicht es, zu jedwedem Zeitpunkt, zu dem eine Verbindung hergestellt werden soll, das kostengünstigste Netz bzw. den optimierten Pfad ausfindig zu machen. Die Ermittlung erfolgt vorteilhaft anhand der netzspezifischen Kostenparameter, also der Gebührenstruktur und der entsprechenden Zeiten, welchen die unterschiedlichen Gebühren zugeordnet sind unter Berücksichtigung des Zeitpunktes, zu dem das Gespräch geführt werden soll. Mit der erfindungsgemäßen Vorrichtung ist es also möglich, sich stets die kostengünstigste Verbindung zunutze zu machen. Der Begriff 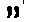 Telekommunikation" bedeutet in diesem Zusammenhang nicht nur eine verbale Kommunikaiton in Form eines Telefonats, sondern jedwede Form der Daten- und Informationsübertragung, also beispielsweise Bildtelefonate, Telefax-Verbindungen, Datenverbindungen, Paging-Dienste, elektronische Post, Online-Dienste, etc.

Das Mittel, welches zur Bestimmung und Anwahl des entsprechend kostenoptimierten Netzes bzw. Pfades dient, kann erfindungsgemäß eine mit den jeweiligen netzspezifischen Kostenparametern bestückte Datenspeicher- und - verarbeitungseinrichtung sein, wobei sich hierfür insbesondere ein Mikroprozessor als geeignet erwiesen hat. Da es sich bei den Netzen, die anwählbar sind, um unterschiedliche Netze handelt, die möglicherweise spezifische eigene Datenformate benötigen, kann in weiterer Erfindungsausgestaltung vorgesehen sein, daß das Mittel, gegebenenfalls die Datenspeicher- und -verarbeitungseinrichtung zur Einstellung der von der Telekommunikationsvorrichtung gelieferten Signale entsprechend dem für das gewählte Kommunikationsnetz oder den Kommunikationspfad erforderlichen Datenformat ausgebildet ist. Beispielsweise wird, wenn das geeignete Netz bzw. der Pfad ermittelt ist, für den Benutzer unbemerkt die Rufnummer, also die von der Telekommunikationsvorrichtung an das Mittel gelieferten Signale so umgebaut, daß die Verbindung über das selektierte Netz bzw. den Pfad zustandekommt. Nachdem der anzuwählende Kommunikationspartner angewählt wurde, verhält sich die Vorrichtung völlig transparent und greift nicht in den nachfolgenden Kommunikationsstrom ein. Auch für ankommende Verbindungen verhält sich die Vorrichtung völlig passiv, das heißt, der Kommunikationsstrom wird in keiner Weise beeinflußt.

Da sich die Gebührenstrukturen der unterschiedlichen Netze im Laufe der Zeit verändern können, kann in weiterer Ausgestaltung der Erfindung vorgesehen sein, daß die Einrichtung ein geeignetes Zugangsmittel zur Ermöglichung einer externen Eingabe und/oder Änderung der Kostenparameter aufweist. Hierdurch ist es beispielsweise möglich, bereits zur Konfiguration der Vorrichtung beispielsweise durch den Privatbenutzer selbst die entsprechende Software mit den erforderlichen Kostenparameterdaten mitzuliefern, so daß der Anwender selbst diese über das Zugangsmittel mittels eines Computers eingeben kann. Gleichermaßen können auch Änderungen der Kostenparameter auf diese Weise erfolgen. Alternativ zu einer anwenderseitigen Eingabe/Änderung kann erfindungsgemäß ferner vorgesehen sein, daß die Einrichtung fernwartbar ist, das heißt, daß beispielsweise über ein bevorzugtes Telekommunikationsnetz auf die Parameterstruktur, wie sie im Mittel abgelegt ist, oder wie sie erst abzulegen ist, zugegriffen wird und quasi von einer Schaltzentrale aus die Vorrichtung konfiguriert bzw. gewartet wird. Um dies zu ermöglichen, kann auf Basis der Erfindung ferner vorgesehen sein, daß die Vorrichtung eine vorbestimmte Adressinformation zur Identifikation der Vorrichtung gebenüber einer Fernwartungsvorrichtung aufweist, das heißt, daß der Vorrichtung eine Kennung zu eigen ist, die von der Fernwartungsvorrichtung erkannt wird und so spezifisch auf die einzelne Vorrichtung zugegriffen werden kann.

Um die Vorrichtung möglichst selbständig betreiben zu können, kann in weiterer Erfindungsausgestaltung vorgesehen sein, daß sie eine eigene Leistungsversorgung aufweist. Ferner kann erfindungsgemäß vorgesehen sein, daß das Mittel in Abhängigkeit der von der Telekommunikationsvorrichtung gelieferten Anwahlsignale aktivierbar ist. Hierdurch ist es möglich, das Anwahlmittel nur dann zu aktivieren, wenn die Anwahlsignale eine bestimmte Qualität oder Wertigkeit haben. Denn beispielsweise ein Notruf muß stets von jeder Telekommunikationsvorrichtung aus absetzbar sein, ohne daß es durch den Auswahlbetrieb des Mittels zu irgendwelchen Schwierigkeiten kommt, die beispielsweise derart gelagert sein können, daß das Mittel kein geeignetes Netz findet und so entweder die Verbindung sich verzögert oder überhaupt nicht zustande kommt. Wird nun beispielsweise ein Signal dem Mittel zugeführt, das einer Notrufnummer entspricht, so wird das Mittel nicht aktiviert, so daß der Notruf über ein geeignetes Netz auf jeden Fall abgesetzt wird.

Desweiteren kann erfindungsgemäß vorgesehen sein, daß in der Datenspeicher- und -verarbeitungseinrichtung weitere, insbesondere bereits erfolgte Kommunikationen betreffende und bei Bedarf, gegebenenfalls in Abhängigkeit der von der Telekommunikationsvorrichtung gelieferten Signale auslesbare Daten speicherbar sind. Hierdurch ist es möglich, beispielsweise interne Statistiken führen zu können, die anschließend vom Benutzer beispielsweise mittels eines Computers oder dergleichen entsprechend ausgewertet werden können. Ferner können so Kurzwahlziele eingegeben werden, die signalabhängig aktiviert werden, gleichermaßen können auf diese Weise auch entsprechende Sperrdaten für besondere Rufnummern abgelegt werden.

Um das Zustandekommen einer Verbindung möglichst zügig gestalten zu können, kann ferner vorgesehen sein, daß zumindest für zwei mögliche Kommunikationsnetze oder Kommunikationspfade die sich ergebenden Kommunikationskosten ermittelbar sind, wobei das als nicht optimiert qualifizierte Ermittlungsergebnis dann zur Durchführung der Kommunikation gewählt wird, wenn eine Nutzung des Netzes oder des Pfades gemäß dem bevorzugten Ermittlungsergebnis nicht möglich ist. Es wird quasi eine Alternativroute parallel zur optimierten Route festgelegt, auf die dann unmittelbar zurückgegriffen werden kann, wenn die bevorzugte Verbindung nicht zustande kommt, ohne daß ein erneuter Bestimmungsschritt erforderlich ist.

Ferner kann vorgesehen sein, daß die Vorrichtung in eine Telekommunikationsvorrichtung integriert ist, das heißt, daß beispielsweise die erfindungsgemäße Vorrichtung innerhalb eines Telefons angeordnet ist, sie also nicht als externes Gerät ausgebildet ist.

Gemäß einer vorteilhaften Weiterbildung der Erfindung kann vorgesehen sein, daß das Mittel, gegebenenfalls die Datenspeicher- und Verarbeitungseinrichtung, oder ein vorrichtungsseitig integriertes zweites Mittel zum Geben wenigstens eines von einer externen netzspezifischen Stelle lesbaren vorrichtungsspeziflschen Identifikationssignals mit dem Anwahlsignal ausgebildet ist. Mittels diesem von einer netzspezifischen Stelle lesbaren Identifikationssignal ist es möglich, daß der Netzbetreiber die jeweilige Vorrichtung authentisieren kann, das heißt, er kann die Box hinsichtlich der Netzzugangsmöglichkeit, der Freischaltung, etc. überprüfen und in Abhängigkeit des Überprüfungsergebnisses die Freischaltung vornehmen. Selbstverständlich dient dieses Identifikationssignal gleichermaßen zum Abrechnen der anfallenden Gebühren, welche nach erfolgter Überprüfung der jeweiligen Box, die dann anhand des Identifikationssignals bekannt ist, zugeordnet werden. Dabei kann lediglich ein Identifikationssignal vorgesehen sein, selbstverständlich kann auch für jedes Telekommunikationsnetz ein eigenes Identifikationssignal vorgesehen sein, welches jeweils automatisch mit dem Anwahlsignal mitübertragen wird. Das oder die Identifikationssignale sind zumindest benutzerseitig nicht änderbar, um etwaige Manipulationen auszuschließen, wobei das Identifikationssignal selbst der Vorrichtung beispielsweise vom jeweiligen Netzbetreiber selbst implementiert wird, oder aber gegebenenfalls von authorisierten Händlern oder dergleichen.

Gemäß einer vorteilhaften weiteren Erfindungsausgestaltung kann ferner vorgesehen sein, daß das Mittel, gegebenenfalls das zweite Mittel oder ein vorrichtungsseitig vorgesehenes drittes Mittel zum Erkennen und Überprüfen eines der Vorrichtung zugeführten Benutzer-Identifikationscodes und zum Freigeben der Vorrichtung und damit des Kommunikationsbetriebs in Abhängigkeit des Identifikationscodes ausgebildet ist. Auch diese erfindungsgemäße Ausgestaltung dient dazu, einen Sicherungsmechanismus gegen eine unerlaubte Vorrichtungs- und Netzbenutzung zu schaffen. Denn, da der Kommunikationsbetrieb nur in Abhängigkeit des Benutzer-Identifikationscodes, der hierfür selbstverständlich in korrekter und zulässiger Form eingegeben werden muß, möglich ist, ist es unbefugten Personen nicht` möglich, die Vorrichtung und damit die Kommunikationsmöglichkeit zu nutzen. Dies kommt beispielsweise dann zum Tragen, wenn innerhalb eines 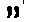 Corporated Networks" eines größeren Unternehmens, welches über entsprechend kostengünstige Standleitungen zwischen mehreren Standorten verfügt, einem oder mehreren Mitarbeitern Heimarbeitsplätze zur Verfügung gestellt werden. Ist dann die erfindungsgemäße Vorrichtung vorgeschaltet, ist die Nutzung des 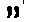 Corporated Networks" nur dann möglich, wenn der zulässige Identifikationscode eingegeben wird. Dem Nichtberechtigten ist es damit nicht möglich, entsprechende kostengünstige Telefonate oder dergleichen unter Verwendung des firmeneigenen Standnetzes vorzunehmen.

Dabei kann erfindungsgemäß der Benutzer-Identifikationscode der Vorrichtung über eine Tastatur, insbesondere die Tastatur der Telekommunikationsvorrichtung, mittels eines externen Eingabemediums, insbesondere einer Chip- oder Magnetkarte oder mittels einer Spracheingabevorrichtung zugeführt werden. Die Tastatur und/oder die Erfassungseinrichtung des externen Eingabemediums und/oder der Spracheingabevorrichtung kann dabei separat zur Vorrichtung angeordnet sein. Zweckmäßigerweise kann die jeweilige Eingabeeinrichtung aber erfindungsgemäß an oder in der Vorrichtung integriert sein.

Da im Falle beispielsweise einer Notsituation oder dergleichen auch über ein normalerweise einen zulässigen Benutzer-Identifikationscode erfordernde Vorrichtung ein Notruf absetzbar sein sollte, kann erfindungsgemäß ferner vorgesehen sein, daß die codeabhängige Freigabe derart ist, daß auch bei fehlerhaftem Benutzer-Identifikationscode eine Freigabe eines Teilbetriebs der Vorrichtung und damit des Kommunikationsbetriebs erfolgt. Auf diese Weise können beispielsweise Notrufe oder dergleichen auch von einem Nichtberechtigten abgesetzt werden. Gleichermaßen kann auf diese Weise auch die Anrufbarkeit der jeweiligen Telekommunikationsvorrichtung realisiert werden. Die mittels des Benutzer-Identifikationscodes realisierbare Nutzungssperre kann nach dieser erfindungsgemäßen Weiterbildung letztlich flexibel und abhängig vom jeweiligen Anwendungsfall eingestellt werden. Beispielsweise kann die Sperre derart eingestellt werden, daß auch von einem Nichtberechtigten nur Ortsgespräche oder dergleichen möglich sind, auch die Möglichkeit einer zeitlich begrenzten Nutzung oder die Nutzung nur zu bestimmten Tageszeiten kann hiermit vorgesehen werden.

Um einen weiteren Sicherungsmechanismus gegen unbefugte Manipulation der Vorrichtung zu realisieren, kann erfindungsgemäß ferner vorgesehen sein, daß das Mittel, gegebenenfalls das zweite Mittel, das vorrichtungsseitig vorgesehene dritte Mittel oder ein vorrichtungsseitig vorgesehenes viertes Mittel zum Erkennen eines der Vorrichtung gebbaren Zugangcodes für den Zugriff auf die netzspezifischen Kostenparameter ausgebildet ist. Mit dieser zweckmäßigen Erfindungsausgestaltung soll verhindert werden, daß unbefugt auf die Kostenparameter zugegriffen werden kann und diese unzulässigerweise überschrieben werden. Denn wäre beispielsweise die Kostenstruktur eines bestimmten Netzanbieters oder etwaige dem jeweiligen Endteilnehmer zugeordnete kostenbevorzugte Nummern oder dergleichen von einem anderen Netzanbieter oder einem mit diesem verbundenen Dritten überschreibbar, beispielsweise mit dessen bevorzugten Kostenparametern, so könnte wahllos manipuliert werden. Ist aber das jeweilige Mittel in der erfindungsgemäßen Form ausgebildet, ist es nur für den jeweils Zugangsberechtigten möglich, auf die jeweiligen netzspezifischen Kostenparameter zuzugreifen. Dies kann beispielsweise nur der Vorrichtungshersteller sein, oder aber entsprechende von ihm authorisierte Personen, die die Kostenstrukturen mehrerer Netzanbieter als Gesamtpaket in zulässiger Weise vorrichtungsseitig implementieren dürfen.

Weitere Vorteile, Merkmale und Einzelheiten ergeben sich aus den im folgenden beschriebenen Ausführungsbeispielen sowie anhand der Zeichnungen. Dabei zeigen:
- Fig. 1: eine Prinzipsskizze der Adaption einer erfindungsgemäßen Vorrichtung an terestrische und funkgestützte Netze,
- Fig. 2: ein Beispiel für eine zu einer bestimmten Zeit gewählte Verbindung A,
- Fig. 3: ein Beispiel für eine zu einer anderen Zeit gewählten Verbindung B,
- Fig. 4: ein Beispiel einer ersten Modifikation einer erfindungsgemäßen Vorrichtung, und,
- Fig. 5: ein Beispiel einer zweiten erfindungsgemäßen Vorrichtungsmodifikation.

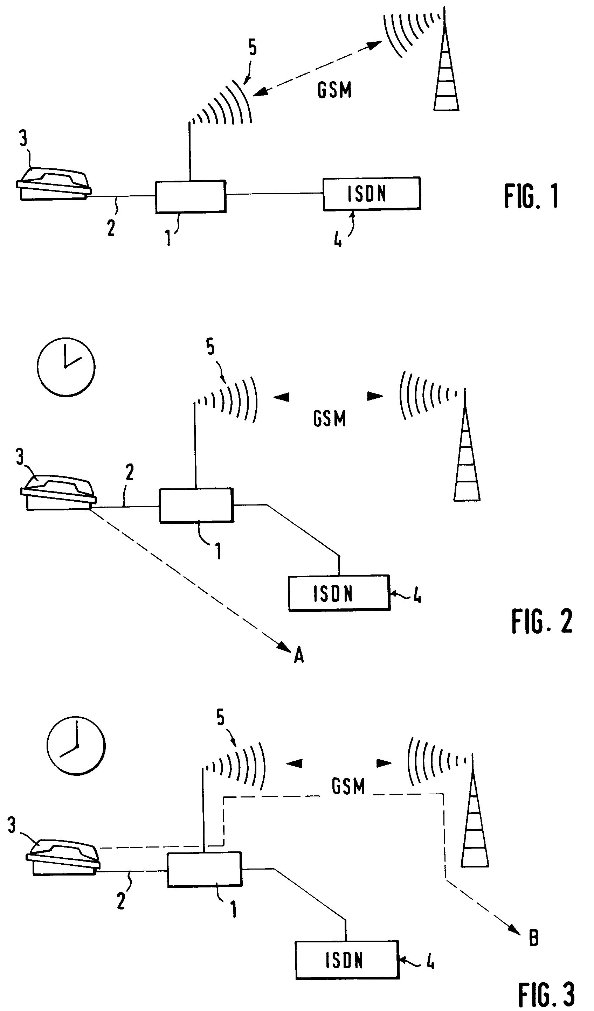

Fig. 1 zeigt in einer prinzipiellen Skizze den Einsatz der erfindungsgemäßen Vorrichtung. Die Vorrichtung 1 kommuniziert über die dargestellte Kommunikationsleitung 2 mit einer Telekommunikationsvorrichtung 3 in Form des hier gezeigten Telefons. Über die Leitung 2 werden die beim Wählen in der Telekommunikationsvorrichtung 3 erzeugten Signale an die Vorrichtung 1 gegeben, die dann quasi aktiviert wird und mit ihrem Auswahlmodus beginnt. Die Vorrichtung 1 weist Zugangsmittel in Form geeigneter Schnittstellen zu unterschiedlichen Netzen auf. Die Anzahl der Schnittstellen ist nicht begrenzt, das heißt, es können unbegrenzt viele Schnittstellen vorgesehen sein, um zu jedwedem existierenden Netz Zugang zu finden. Bei diesen Schnittstellen kann es sich um analoge Schnittstellen gleichwie um digitale Schnittstellen zur Anwahl entsprechender terestrischer Netze handeln, gleichwie um geeignete Funkschnittstellen, um auf die funkgestützten Netze zugreifen zu können. Im gezeigten Beispiel ist die Vorrichtung 1 sowohl an terestrische Netze 4, von denen hier das 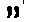 ISDN-Netz" gezeigt ist, wie auch an funkgestützte Netze 5, von denen hier das 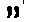 GSM-Netz" (Global Standard for Mobil Communication), das beispielsweise Zugang zu den D1 - und D2-Netzen liefert, exemplarisch adaptiert.

Im Zeitpunkt des Eingangs der Anwahlsignale von der Telekommunikationsvorrichtung 3 an der Vorrichtung 1 wird das Mittel, also beispielsweise der Mikroprozessor, aktiviert und greift auf die in ihm abgelegten Kommunikationskostenparameter zurück. Diese können beispielsweise in Form einer internen Tabelle abgespeichert sein. Anhand dieser Parameter ermittelt der Mikroprozessor das kostengünstigste Netz bzw. den kostengünstigsten Pfad im momentanen Zeitpunkt, und realisiert die hierbei ausgewählte Verbindung.

Fig. 2 zeigt ein Beispiel für eine entsprechend gewählte Verbindung. Der Benutzer hat die gewünschte Rufnummer im gezeigten Beispiel um 14.00 Uhr angewählt. Entsprechend der in der Vorrichtung 1 abgelegten Kostenparameter ergibt sich, daß zu dieser Zeit der gewünschte Kommunikationsteilnehmer am günstigsten über das terestrische ISDN-Netz zu erreichen ist. Infolge dieses Ergebnisses wird diese Verbindung A mittels der Vorrichtung 1 hergestellt. Demgegenüber gestaltet sich die Verbindung gemäß dem in Fig. 3 gezeigten Beispiel anders. In diesem Fall möchte der Benutzer die Verbindung um 20.00 Uhr aufbauen. Zu diesem Zeitpunkt ergibt sich als Ermittlungsergebnis, daß der gewünschte Teilnehmer über eine funkgestützte Verbindung (Verbindung B) am kostengünstigsten zu erreichen ist, weshalb mittels der Vorrichtung 1 diese Verbindung hergestellt wird.

In den Prinzipsskizzen ist die Vorrichtung 1 als externe Vorrichtung zur Telekommunikationsvorrichtung 3 gezeigt. Selbstverständlich kann diese Vorrichtung auch in die Telekommunikationsvorrichtung, also beispielsweise das Telefon integriert sein, so daß bei Neuanschaffung lediglich ein Gerät erforderlich ist. Mit einer externen Vorrichtung ist aber vorteilhaft eine Nachrüstung bereits bestehender Telekommunikationsvorrichtungen möglich.

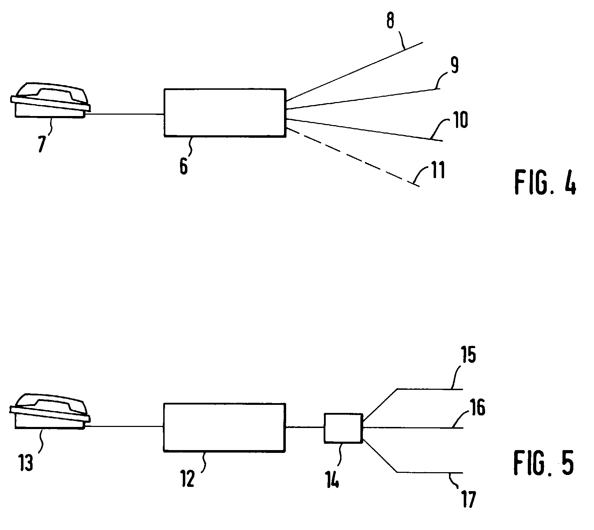

Die Fig. 4 und 5 zeigen zwei unterschiedliche Ausführungsformen der erfindungsgemäßen Vorrichtung. Fig. 4 zeigt dabei eine Vorrichtung 6, die mit einer Telekommunikationsvorrichtung 7 gekoppelt ist. Die Vorrichtung 6 weist im gezeigten Ausführungsbeispiel vier separate Zugänge zu verschiedenen Netzen 8, 9, 10, 11 auf, wobei die Netze 8 - 10 kabelgebunden sind, das Netz 11 ist ein Funknetz. Das heißt, für jedes Netz ist an der Vorrichtung ein separater Anschluß vorgesehen.

Demgegenüber steht die in Fig. 5 gezeigte Vorrichtung 12, die ebenfalls mit einer Telekommunikationsvorrichtung 13 verbunden ist. Der Vorrichtung 12 nachgeschaltet ist ein Netzzugangskonzentrator 14, welcher den hier gezeigten drei verschiedenen Netzen 15, 16, 17 zugeschaltet ist. Die hier gezeigte Vorrichtung 12 weist lediglich einen Zugang zum Netzkonzentrator 14 und damit zu den unterschiedlichen Netzen auf, das heißt, hier ist nur ein Zugangsmittel zu mehreren verschiedenen Netzen vorgesehen. Die Funktionsweise der Vorrichtung ist nun derart, daß vorrichtungsseitig zur Anwahl und Bestimmung des jeweiligen Netzes die gewählte Rufnummer derart 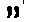 umgebaut" wird, daß über den Netzzugangskonzentrator das jeweils ausgewählte Netz angesprochen wird. Der 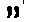 Umbau" kann dabei derart sein, daß der eigentlichen Rufnummer entsprechende Codierungen oder Signale vorgesetzt werden, die für ein bestimmtes Netz spezifisch sind. Im Rahmen dieses 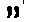 Umbaus" ist es auch möglich, ein vorrichtungsspezifisches Identifikationssignal mit dem Anwahlsignal zu geben, wobei das Hinzufügen eines Identifikationssignals auch ohne eine Signaländerung beispielsweise in der vorher beschriebenen Form oder in anderer, netzspezifischer Aufbereitung erfolgen kann, wie bei einer Vorrichtung gemäß Fig. 4 der Fall.

## Patentansprüche

1. Vorrichtung zur Ermöglichung einer kostenoptimierten Telekommunikation unter Verwendung einer Telekommunikationsvorrichtung und eines oder mehrerer Telekommunikationsnetze, wobei mehrere unterschiedliche Telekommunikationsnetze zur Verfügung stehen, die, gegebenenfalls in Verbindung miteinander, dabei einen Kommunikationspfad bildend, im Rahmen der Telekommunikation nutzbar sind, dadurch gekennzeichnet, daß die mit der Telekommunikationsvorrichtung (3) kommunizierende Vorrichtung (1) über Zugangsmittel zu mehreren unterschiedlichen Netzen verfügt und ein Mittel zur Ermittlung und Anwahl desjenigen Telekommunikationsnetzes oder Kommunikationspfades aufweist, das oder der hinsichtlich der gegebenen Kommunikationskosten im Zeitpunkt des Eingangs der von der Telekommunikationsvorrichtung (3) gelieferten Anwahlsignale optimiert ist, wobei die Ermittlung in Abhängigkeit netzspezifischer Kostenparameter erfolgt.

2. Vorrichtung nach Anspruch 1, dadurch gekennzeichnet, daß das Mittel eine mit den jeweiligen netzspezifischen Kostenparametern bestückte Datenspeicher- und verarbeitungseinrichtung, insbesondere ein Microprozessor ist.

3. Vorrichtung nach Anspruch 1 oder 2, dadurch gekennzeichnet, daß das Mittel, gegebenenfalls die Datenspeicher- und verarbeitungseinrichtung zur Einstellung der von der Telekommunikationsvorrichtung (3) gelieferten Signale entsprechend dem für das gewählte Kommunikationsnetz oder den Kommunikationspfad erforderlichen Datenformat ausgebildet ist.

4. Vorrichtung nach Anspruch 2 oder 3, dadurch gekennzeichnet, daß die Vorrichtung (1) ein geeignetes Zugangsmittel zur Ermöglichung einer externen Eingabe und/oder Änderung der Kostenparameter aufweist.

5. Vorrichtung nach Anspruch 4, dadurch gekennzeichnet, daß die Vorrichtung (1) fernwartbar ist.

6. Vorrichtung nach Anspruch 5, dadurch gekennzeichnet, daß die Vorrichtung (1) eine vorbestimmte Adressinformation zur Identifikation der Vorrichtung gegenüber einer Fernwartungsvorrichtung aufweist.

7. Vorrichtung nach einem der vorangehenden Ansprüche, dadurch gekennzeichnet, daß die Vorrichtung (1) eine eigene Leistungsversorgung aufweist.

8. Vorrichtung nach einem der vorangehenden Ansprüche, dadurch gekennzeichnet, daß das Mittel, gegebenenfalls die Datenspeicher- und verarbeitungseinrichtung, oder ein vorrichtungsseitig integriertes zweite Mittel zum Geben wenigstens eines von einer externen netzspezifischen Stelle lesbaren vorrichtungsspezifischen Identifikationssignals mit dem Anwahlsignal ausgebildet ist.

9. Vorrichtung nach Anspruch 8, dadurch gekennzeichnet, daß für jedes Telekommunikationsnetz ein eigenes Identifikationssignal vorgesehen ist.

10. Vorrichtung nach Anspruch 8 oder 9, dadurch gekennzeichnet, daß das oder die Identifikationssignale zumindest benutzerseitig nicht änderbar sind.

11. Vorrichtung nach einem der vorangehenden Ansprüche, dadurch gekennzeichnet, daß das Mittel, gegebenenfalls das zweite Mittel oder ein vorrichtungsseitig vorgesehenes drittes Mittel zum Erkennen und Überprüfen eines der Vorrichtung zugeführten Benutzer-Identifikationscodes und zum Freigeben der Vorrichtung und damit des Kommunikationsbetriebs in Abhängigkeit des Identifikationscodes ausgebildet ist.

12. Vorrichtung nach Anspruch 11, dadurch gekennzeichnet, daß der BenutzerIdentifikationscode der Vorrichtung über eine Tastatur, insbesondere die Tastatur der Telekommunikationsvorrichtung` mittels eines externen Eingabemediums, insbesondere einer Chip- oder Magnetkarte oder mittels einer Spracheingabevorrichtung zuführbar ist.

13. Vorrichtung nach Anspruch 12, dadurch gekennzeichnet, daß die Tastatur und/oder die Erfassungseinrichtung des externen Eingabemediums und/oder die Spracheingabevorrichtung an oder in der Vorrichtung integriert sind.

14. Vorrichtung nach einem der Ansprüche 11 bis 13, dadurch gekennzeichnet, daß die codeabhängige Freigabe derart ist, daß auch bei fehlerhaftem Benutzer-Identifikationscode eine Freigabe eines Teilbetriebs der Vorrichtung und damit des Kommunikationsbetriebs erfolgt.

15. Vorrichtung nach einem der vorangehenden Ansprüche, dadurch gekennzeichnet, daß das Mittel, gegebenenfalls das zweite Mittel, das vorrichtungsseitig vorgesehenes dritte Mittel oder ein vorrichtungsseitig vorgesehenes viertes Mittel zum Erkennen eines der Vorrichtung gebbaren Zugangscodes für den Zugriff auf die netzspezifischen Kostenparameter ausgebildet ist.

16. Vorrichtung nach einem der vorangehenden Ansprüche, dadurch gekennzeichnet, daß das Mittel in Abhängigkeit der von der Telekommunikationsvorrichtung (3) gelieferten Anwahlsignale aktivierbar ist.

17. Vorrichtung nach einem der Ansprüche 2 bis 16, dadurch gekennzeichnet, daß in der Datenspeicher- und verarbeitungseinrichtung weitere, insbesondere bereits erfolgte Kommunikationen betreffende und bei Bedarf, gegebenenfalls in Abhängigkeit der von der Telekommunikationsvorrichtung (3) gelieferten Signale auslesbare Daten speicherbar sind.

18. Vorrichtung nach einem der vorangehenden Ansprüche, dadurch gekennzeichnet, daß zumindest für zwei mögliche Kommunikationsnetze oder Kommunikationspfade die sich ergebenden Kommunikationskosten ermittelbar sind, wobei das als nicht optimiert qualifizierte Ermittlungsergebnis dann zur Durchführung der Kommunikation gewählt wird, wenn eine Nutzung des Netzes oder des Pfades gemäß dem bevorzugten Ermittlungsergebnis nicht möglich ist.

19. Vorrichtung nach einem der vorangehenden Ansprüche, dadurch gekennzeichnet, daß die Einrichtung in eine Telekommunikationsvorrichtung integriert ist.
